# EUROPEAN PATENT SPECIFICATION

(11) **EP 3 271 620 B1**
(45) Date of publication and mention of the grant of the patent: **20.05.2020**
(21) Application number: 16720892.5
(22) Date of filing: 18.03.2016
(51) Int. Cl.: F16H 59/02, B60K 6/547, F16H 59/04

(54) **SELECTION SYSTEM OF A VEHICULAR TRACTION MODE OF A HYBRID OR MULTIMODAL VEHICLE**
AUSWAHLSYSTEM EINES FAHRZEUGTRAKTIONSMODUS EINES HYBRIDEN ODER MULTIMODALEN FAHRZEUGS
SYSTÈME DE SÉLECTION D'UN MODE DE TRACTION DE VÉHICULE D'UN VÉHICULE HYBRIDE OU MULTIMODE

(30) Priority: 20.03.2015 IT TO20150178
(43) Date of publication of application: 24.01.2018
(73) Proprietor: Iveco S.p.A., 10156 Torino (IT)
(72) Inventor: AIMO BOOT, Marco, 10072 Caselle Torinese (IT); BARBIERI, Armando, 16156 Genova (IT); BERNARDINI, Alessandro, 16123 Genova (IT)
(74) Representative: Fiume, Orazio
(86) International application number: PCT/IB2016/051551
(87) International publication number: WO 2016/151457

(56) References cited:
- EP-A1- 1 900 974
- EP-A1- 2 684 727
- EP-A1- 2 913 563
- EP-A2- 1 759 915
- DE-A1-102010 036 389
- DE-A1-102013 207 789

## Description

### Field of the invention

The present invention refers to the field of in-vehicle man-machine interfaces and, precisely, of systems for selecting a vehicular traction mode of a hybrid or multimodal vehicle. EP1759915 discloses a hybrid vehicle including a combustion engine and electric motors operated by electric energy and a gear shift lever arranged to switch between the combustion engine and the electric motor operation according to the preamble of claim 1.

### Discussion of the prior art

Hybrid vehicles comprise an internal combustion engine and an electric motor connected to the driveline.

In hybrid vehicles, the electric motor cooperates with the internal combustion engine to drive the vehicle by recovering energy under braking or contributing to the torque during propulsion.

Multimodal vehicles are defined as hybrid vehicles which, in addition to the functions described above, can also operate in "purely electric" traction mode, that is to say, with the internal combustion engine deactivated, and in "recharge" mode in which the vehicle is propelled by the internal combustion engine, while the electric generator recharges the batteries.

Clearly, the appropriate commands must be provided on the vehicle's dashboard in order to switch from one mode to the other. Increasingly often these controls are included in specific menus and sub-menus of the on-board computer. Therefore, upon entering an area in which purely electric traction is permitted, the driver must access the menus of the on-board computer to set said mode.

For the sake of convenience, in the following description the terms "purely electric mode" or "purely electric traction mode" will be used to refer to a type of traction in which the internal combustion engine is completely deactivated and the terms "fuel mode" or "fuel traction mode" to indicate traction that envisages the activation, albeit not continuously, of the internal combustion engine.

### Summary of the invention

The purpose of the present invention is to provide a selection system of a purely electric traction mode of a hybrid or multimodal vehicle that is extremely intuitive and easy to operate.

The idea at the basis of the present invention is to incorporate certain controls in the manual gearbox lever in order to switch from any fuel mode, in which the internal combustion engine is active, albeit not stably or cyclically, to a purely electric mode and vice versa. In particular, the idea is to implement an engagement position of the gearbox control lever that simultaneously selects neutral and the purely electric traction mode.

According to a preferred embodiment of the invention, said engagement position is implemented as an extension of the gear selection travel obtained by overcoming a barrier.

The overtravel position is engaged by overcoming a barrier, preferably by raising a sliding sleeve fitted to the gearbox lever. Alternatively, the barrier is overcome by exerting an axial pressure on the gearbox lever.

According to the invention, there is a push-button on the knob of the gearbox lever which, if pressed during a step of disengagement of said overtravel engagement position, prevents the reactivation of said fuel mode and keeps the purely electric mode enabled. Such method of operation is particularly advantageous when the driver intends to engage the electric reverse gear.

The object of the present invention is a selection system of a vehicular traction mode of a hybrid or multimodal vehicle as claimed in claim 1.

Another object of the present invention is a method of selection of a vehicular traction mode of a hybrid and/or multimodal vehicle.

A further object of the present invention is a hybrid and/or multimodal land vehicle.

The claims describe preferred embodiments of the invention and form an integral part of the present description.

### Brief description of the drawings

Further purposes and advantages of the present invention will become clear from the following detailed description of a preferred embodiment (and alternative embodiments) thereof and from the accompanying drawings which are merely illustrative and not limiting, in which:
figure 1 shows a gear selection pattern of the gearbox according to the present invention;
figure 2 illustrates a preferred transmission layout implemented in combination with the present invention,
figure 3 shows a support for a gearbox lever and a respective sleeve for implementing the present invention, according to a preferred embodiment thereof.

In the figures the same reference numerals and letters indicate the same parts or components.

Within the scope of the present description, the term "second" component does not imply the presence of a "first" component. Such terms are simply used for the sake of clarity and should not be considered as limiting the scope of the invention.

### Detailed description of embodiments of the invention

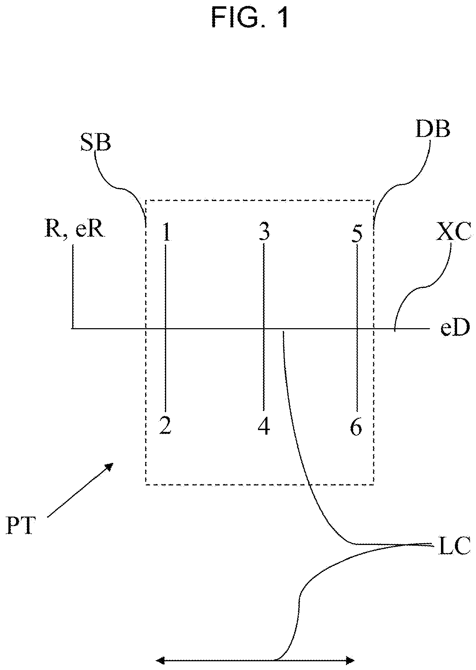

Figure 1 illustrates a gear selection grid or pattern of a gearbox control-lever configured according to the present invention.

The horizontal line, generally transversal to a longitudinal extension of the vehicle, which permits the selection of gears 1,2 or 3,4 or 5,6, is usually referred to as the "selection travel" and is indicated by the letters LC, while the transverse lines, normally parallel to the longitudinal extension of the vehicle, are called "first gear 1, "second gear 2", etc.

Figure 1 shows a dashed square inside which are the gears from 1 - 6 (or from 1 - 5), while the reverse gear R and the symbol eD are outside said square. This means that both the reverse gear R and the engagement position eD can only be reached by overcoming a left barrier SB and a right barrier DB, respectively. The concept of barrier and overtravel associated with overcoming the respective barrier is known in the prior art. Thus, in figure 1 it is immediately apparent that the engagement of the reverse gear requires an overtravel to the left and a subsequent forward (or backward) selection travel parallel to the longitudinal extension of the vehicle, while the selection of the position eD only requires an overtravel to the right, without then moving the lever forwards or backwards. There are substantially two known types of barriers for engaging the reverse gear, namely those that require the application of an axial pressure on the gearbox lever and those that involve lifting a sliding sleeve C on the gearbox lever that can usually be reached with the fingers while the holding the palm of the same hand on a portion of the knob.

This precaution prevents the accidental selection of the reverse gear, in order to avoid serious damage to said gearbox.

It must be clear that the method of engagement of the reverse gear is not relevant for the purpose of the present invention. This is only described in order to clarify the aspects it has in common with the engagement eD which is the idea at the basis of the present invention.

According to the present invention the position eD is engaged by overcoming a barrier, preferably of the type with a sliding sleeve C on the gearbox lever L.

According to the present invention, the engagement of the position eD, which is substantially continuous and aligned with the selection travel LC, does not engage any gear of the gearbox, which is left in neutral. Said engagement simultaneously closes an electric contact SS which disables all of the vehicle's fuel traction modes so that only the purely electric mode can be enabled.

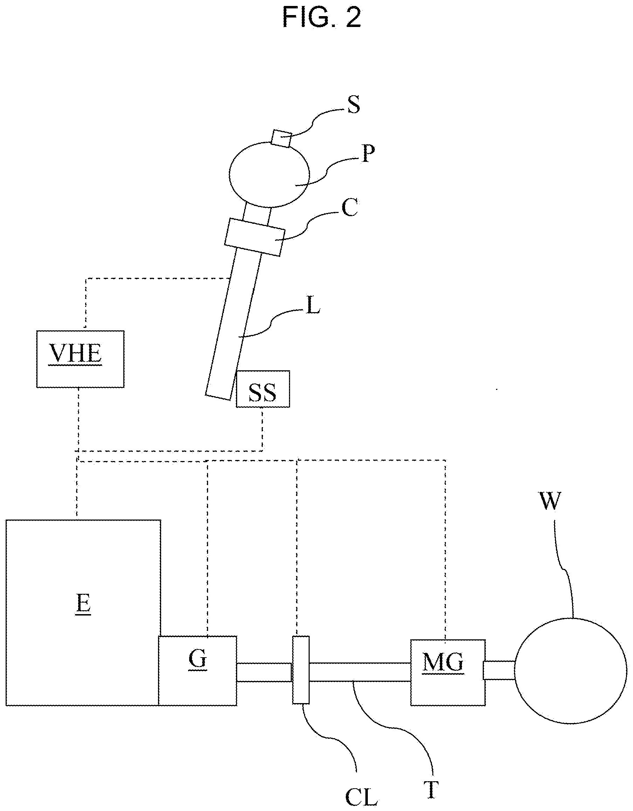

According to the invention, on the knob P of the gearbox lever L, shown in figure 2, there is also a normally-open switch associated with a monostable push-button S.

During the operation of the vehicle in fuel traction mode, said push-button enables cycling between two or more different fuel traction modes, which are preferably indicated from time to time on an appropriate display on the vehicle's dashboard.

The concept of cycling is well known to the person skilled in the art, and means that an operating mode can be selected by repeatedly pressing the push-button to select the desired mode. Thus, said push-button S located on the knob of the gearbox lever can be used for example to select "recharge" mode before reaching an area with limited access to traffic in order to store electric power and then, bringing the lever in the position eD, that is overcoming said barrier, the vehicle can be switched to purely electric traction mode.

It is clear that the driver does not need to access complex menus of the on-board computer, but can switch to the purely electric traction mode and vice versa by means of a simple gesture to operate a control device that is frequently used. According to a preferred embodiment of the invention, the vehicle driveline comprises a controllable clutch or coupling CL, preferably of the dog clutch type, located on a transmission shaft T downstream of the gearbox G, that is to say, between the gearbox and a driving axle W and an electric motor generator MG connected to said transmission shaft, downstream of the clutch or coupling, so that the electric motor generator can propel the vehicle without also making the second shaft of the gearbox rotate.

It is apparent that this clutch or coupling CL has nothing to do with the main clutch that disconnects the drive shaft of the internal combustion engine E from the first shaft of the gearbox G.

According to said preferred embodiment of the invention, the engagement of the position eD determines an automatic disengagement of said clutch or coupling.

According to a further preferred embodiment of the invention which is combined with tthose described above, when the push-button on the gearbox lever knob is held down, reactivation of the fuel mode and re-engagement of said clutch CL or of said coupling is prevented while switching from the position eD to reverse gear, and the purely electric mode is maintained. Another electric contact is also at least associated with the reverse gear portion, to detect the respective engagement and enable the reversal of the direction of rotation of the motor generator MG.

Therefore, owing to the fact that the knob on the gearbox lever is held down during the disengagement of the position eD until the reverse gear is engaged, the purely electric traction mode is not changed and at the same time a signal is sent to the control unit of the electric motor generator to reverse the direction of rotation of said electric motor generator.

Vice versa, if the position eD is disengaged without pressing the push-button S, the previously set fuel mode is reactivated.

For example, if the previously set mode was "recharge", when the position eD is disengaged, the clutch or coupling CL is reengaged and the internal combustion engine E is re-started. Advantageously, the driver continues to use the gearbox even in the purely electric traction mode, in the same way as in the fuel mode, even though the mechanical functions of the gearbox have absolutely no effect on the traction because said clutch or coupling CL is disengaged.

It is apparent that the operations performed by the driver on the gearbox lever and on the push-button are monitored by a vehicle processing unit VEH which may or may not differ from the processing unit that controls the internal combustion engine ECU.

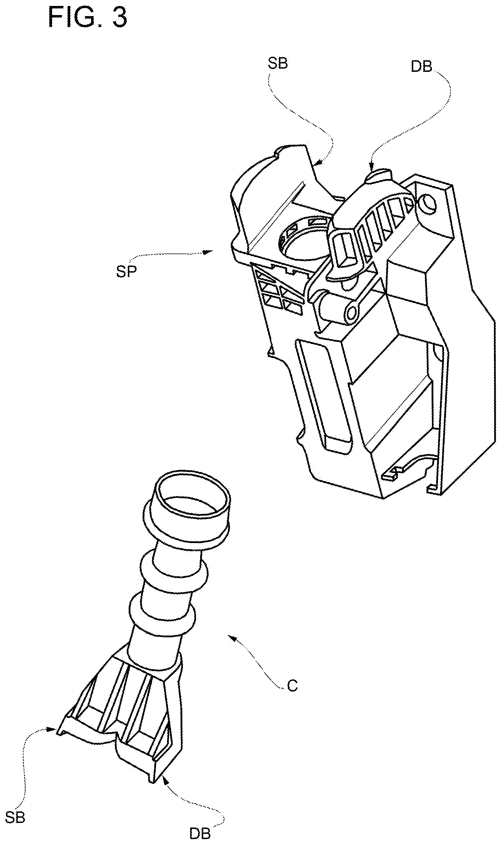

The arrangement described herein applies to left-hand drive vehicles, but the pattern PT can be implemented symmetrically to that illustrated in figure 1, for right-hand drive vehicles. Figure 3 illustrates a support SP, which is a further object of the present invention, for the gearbox lever L according to a preferred embodiment of the invention. The drawing shows the barriers SB and DB implemented by means of longitudinal profiles parallel to one another which interfere with the sleeve C described above, one to engage the reverse gear and the other to engage the portion of overtravel eD.

Thus, whereas the known supports comprise a single barrier, generally arranged on the side facing towards the driver's leg, according to the present invention, the gearbox lever support comprises two barriers, one on each side.

The present invention may advantageously be implemented by means of a computer program comprising coding means to implement one or more steps of the method, when such program is run on a computer. Thus, the scope of protection includes said computer program and also computer readable means comprising a recorded message, said computer readable means comprising program code means designed to implement one or more of the steps of the method, when said program is run on a computer.

From the above description it will be possible for the person skilled in the art to implement the object of the invention without the need for any additional construction details. The elements and the characteristics illustrated in the different preferred embodiments, including the drawings, may be combined without departing from the scope of protection as defined by the appended claims.

## Claims

1. A selection system of a vehicular traction mode of a hybrid or multimodal land vehicle, the vehicle comprising
- an internal combustion engine (E) connected to a driveline (T) through a manual gearbox (G) and
- an electric motor generator (MG) connected directly to said driveline (T),
the gearbox (G) having a respective control lever (L) and a respective gear selection pattern of the gearbox (R, 1 - 5, 1 - 6), wherein said selection pattern comprises a selection travel (LC) transversal to a longitudinal development of the vehicle and comprises a portion of overtravel (eD) aligned and contiguous with said selection travel (LC) and enabling means (SS, VHE and CL) associated with said portion of overtravel, and wherein
- the lever is designed to stably engage said portion of overtravel, keeping the gearbox (G) stably in neutral and, at the same time
- said enabling means (SS, VHE and CL) are designed to enable a purely electric traction mode, wherein said internal combustion engine (E) is stably deactivated in favour of said electric motor generator (MG), said lever (L) comprising an associated knob (P) on which a monostable push-button (S), associated with a normally-open switch, is located, the selection system being **characterised in** comprising a processing unit (VHE) designed to enable one of three or more vehicular traction modes, of which
- two or more fuel traction modes, wherein said internal combustion engine is activated and
- said purely electric traction mode,
and wherein said normally-open switch associated with said push-button is electrically connected to said processing unit (VHE) to cycle between said two or more different fuel modes when said gearbox lever does not engage said portion of overtravel (eD) and to prevent the reactivation of said fuel mode and keep the purely electric mode enabled if said push-button (S) is pressed during a step of disengagement of said portion of overtravel (eD).

2. A system according to claim 1, wherein said enabling means (SS, VHE and CL) are further designed to enable a traction mode wherein said internal combustion engine is at least cyclically active when said lever (L) does not engage said portion of overtravel (eD).

3. A system according to any one of the preceding claims 1 or 2, wherein said portion of overtravel (eD) comprises locking means that can be deactivated by means of axially sliding said lever (L) with respect to an associated support or by means of a sleeve (C) fitted on said lever (L) and interfering with a profile (SB, DB) of an associated support (SP) .

4. A system according to one of the preceding claims, wherein said enabling means comprise an electric contact (SS) designed to detect at least one engagement of said lever (L) in said portion of overtravel (eD).

5. A selection system according to one of claim 1, wherein said vehicle comprises a controllable clutch or coupling (CL) located on a transmission shaft (T) downstream of the gearbox (G), and wherein said processing unit (VHE) is configured to control the disengagement of said clutch or coupling (CL) when said lever (L) engages said portion of overtravel (eD).

6. A selection system according to claim 5, wherein said processing unit (VHE) is configured to
- keep said purely electric mode enabled and
- keep said clutch or coupling (CL) disengaged,
when, during the disengagement of the lever (L) from said portion of overtravel (eD), said monostable push-button (P) is kept depressed.

7. A selection system according to one of claims 5 or 6, wherein said processing unit (VHE) is configured to
- disable said purely electric mode in favour of a fuel mode and
- engage said clutch or coupling (CL),
when the lever (L) disengages said portion of overtravel (eD) while said monostable push-button (P) is released.

8. A hybrid or multimodal land vehicle comprising
- an internal combustion engine (E) connected to a driveline (T) through a manual gearbox (G) and
- an electric motor generator (MG) connected to said driveline (T),
the gearbox (G) having a respective lever (L) and a respective gear selection pattern of the gearbox (R, 1 - 5, 1 - 6), wherein said selection pattern comprises a selection travel (LC) transversal to a longitudinal extension of the vehicle and is **characterized by** comprising a selection system of a vehicular traction mode according to any one of claims 1 to 7.

9. A method of selection of a vehicular traction mode of a hybrid or multimodal land vehicle comprising a selection system according to any one of claims 1 to 7, the method being destined to be implemented on a vehicle processing unit and comprising the following steps:
- detection of an engagement of said lever (L) in said portion of overtravel (eD),
- passage to a purely electric traction mode as long as said lever (L) is detected as being engaged in said portion of overtravel (eD),
the method comprising
a step of cycling between two or more fuel traction modes when said monostable push-button (S) is repeatedly pressed while said lever (L) is disengaged from said portion of overtravel (eD) and a step of preventing the reactivation of said fuel mode and keeping the purely electric mode enabled if said monostable push-button (S) is pressed during a step of disengagement of said portion of overtravel (eD).

10. A method according to claim 9, further comprising a step of returning to a previously selected fuel traction mode, when disengagement of said lever (L) from said portion of overtravel (eD) is detected.

11. A method according to one of claims 9 or 10, wherein said purely electric traction mode is maintained following disengagement of said lever (L) from said portion of overtravel (eD) when said monostable push-button (S) is simultaneously kept depressed.

12. A computer program that comprises program code means designed to implement all of the steps of claims 9 to 11, when said program is run on a computer.

13. Computer readable means comprising a recorded program, said computer readable means comprising program code means designed to implement all of the steps of claims 9 to 11, when said program is run on a computer.

## Patentansprüche

1. Ein Auswahlsystem für einen Traktionsmodus eines Fahrzeugs eines Hybrid- oder Multimodal-Landfahrzeugs, wobei das Fahrzeug umfasst:
- einen internen Verbrennungsmotor (E), verbunden mit einem Antriebsstrang (T) mittels eines manuellen Getriebes (G) und
- einen elektrischen Motorgenerator (MG), der direkt mit dem Antriebsstrang (T) verbunden ist,
wobei das Getriebe (G) einen entsprechenden Schalthebel (L) und ein entsprechendes Gangauswahlschema des Getriebes (R, 1 - 5, 1 - 6) hat, wobei das Gangauswahlschema einen Auswahlhub (LC) quer zu einer Längserstreckung des Fahrzeugs und einen Abschnitt des Überhubs (eD), der ausgerichtet und angrenzend am Auswahlhub ist und Aktivierungsmittel (SS, VHE und CL) umfasst, welche mit dem Abschnitt des Überhubs verbunden sind, und wobei
- der Schalthebel ausgeführt ist, um dauerhaft in den Abschnitt des Überhubs eingelegt zu werden, um das Getriebe (G) dauerhaft in Neutralstellung zu halten und gleichzeitig
- die Aktivierungsmittel (SS, VHE und CL) ausgeführt sind, um einen rein elektrischen Traktionsmodus zu aktivieren, wobei der interne Verbrennungsmotor (E) zugunsten des elektrischen Motorgenerators (MG) dauerhaft deaktiviert ist;
wobei der Schalthebel (L) einen zugeordneten Knauf (P) umfasst, auf dem ein monostabiler Druckknopf (S) angeordnet ist, der mit einem normalerweise offenen Schalter verbunden ist,
wobei das Auswahlsystem **dadurch gekennzeichnet ist, dass** es einer Verarbeitungseinheit (VHE) umfasst, ausgeführt, um einen von drei Fahrzeug-Traktionsmodi freizugeben, von denen
- zwei oder mehr Kraftstoff-Traktionsmodi sind, bei denen der interne Verbrennungsmotor aktiviert ist, und
- einer der rein elektrische Traktionsmodus ist,
und wobei der normalerweise offene Schalter, der mit dem Druckknopf verbunden ist, elektrisch mit der Verarbeitungseinheit (VHE) verbunden ist, um zwischen den zwei oder mehr unterschiedlichen Kraftstoff-Traktionsmodi zu wechseln, wenn der Schalthebel nicht im Abschnitt des Überhubs (eD) eingelegt ist und um die Reaktivierung der Kraftstoff-Traktionsmodi zu verhindern und den rein elektrischen Traktionsmodus freizugeben, falls der Druckknopf (S) während eines Schrittes des Lösens aus dem Abschnitt des Überhubs (eD) gedrückt wird.

2. System nach Anspruch 1, wobei die Aktivierungsmittel (SS, VHE und CL) weiter ausgeführt sind, um einen Traktionsmodus zu aktivieren, wobei der interne Verbrennungsmotor mindestens zyklisch aktiv ist, wenn der Schalthebel (L) nicht in den Abschnitt des Überhubs (eD) eingelegt ist.

3. System nach einem der vorstehenden Ansprüche 1 oder 2, wobei der Abschnitt des Überhubs (eD) Verriegelungsmittel umfasst, die durch axiales Verschieben des Schalthebels (L) in Bezug auf einen zugeordneten Träger oder durch eine Hülse (S), die auf dem Hebel (L) montiert ist und in ein Profil (SB, DB) eines zugeordneten Trägers (SP) eingreift, deaktiviert werden.

4. System nach einem der vorstehenden Ansprüche, wobei die Aktivierungsmittel einen elektrischen Kontakt (SS) umfassen, der ausgeführt ist, um mindestens ein Einlegen des Schalthebels (L) in den Abschnitt des Überhubs (eD) zu erkennen.

5. Auswahlsystem nach Anspruch 1, wobei das Fahrzeug eine steuerbare Kupplung oder Kopplung (CL) umfasst, die auf dem Antriebsstrang (T) strangabwärts des Getriebes (G) angeordnet ist, und wobei die Verarbeitungseinheit (VHE) ausgeführt ist, um die Entkopplung der Kupplung oder Kopplung (CL) zu steuern, wenn der Schalthebel (L) in den Abschnitt des Überhubs (eD) eingelegt wird.

6. Auswahlsystem nach Anspruch 5, wobei die Verarbeitungseinheit (VHE) ausgeführt ist, um
- den rein elektrischen Traktionsmodus zu aktiv zu halten und
- die Kupplung oder Kopplung (CL) entkoppelt zu halten,
wenn während des Lösens des Schalthebels (L) aus dem Abschnitt des Überhubs (eD) der monostabile Druckknopf (P) gedrückt bleibt.

7. Auswahlsystem nach einem der Ansprüche 5 oder 6, wobei die Verarbeitungseinheit (VHE) ausgeführt ist, um
- den rein elektrischen Traktionsmodus zugunsten eines Kraftstoff-Traktionsmodus abzuschalten und
- die Kupplung oder Kopplung (CL) einzukoppeln,
wenn der Schalthebel (L) aus dem Abschnitt des Überhubs (eD) gelöst wird, während der monostabile Druckknopf (P) gelöst ist.

8. Hybrid- oder Multimodal-Landfahrzeug, umfassend
- einen internen Verbrennungsmotor (E), verbunden mit einem Antriebsstrang (T) mittels eines manuellen Getriebes (G) und
- einen elektrischen Motorgenerator (MG), der mit dem Antriebsstrang (T) verbunden ist,
wobei das Getriebe (G) einen entsprechenden Schalthebel (L) und ein entsprechendes Gangauswahlschema des Getriebes (R, 1 - 5, 1 - 6) hat, wobei das Gangauswahlschema einen Auswahlhub (LC) quer zu einer Längserstreckung des Fahrzeugs umfasst und **dadurch gekennzeichnet ist, dass** es ein Auswahlsystem eines Fahrzeug-Traktionsmodus nach einem der Ansprüche 1 bis 7 umfasst.

9. Ein Verfahren zur Auswahl eines Fahrzeug-Traktionsmodus eines Hybrid- oder Multimodal-Landfahrzeugs, umfassend ein Auswahlsystem nach einem der Ansprüche 1 bis 7, wobei das Verfahren vorgesehen ist, um auf einer Fahrzeugverarbeitungseinheit implementiert zu werden und folgende Schritte umfasst:
- Erkennen eines Einlegens des Schalthebels (L) in den Abschnitt des Überhubs (eD),
- Übergang zu einem rein elektrischen Traktionsmodus, solange der Schalthebel (L) als eingelegt in dem Abschnitt des Überhubs (eD) erkannt wird,
wobei das Verfahren umfasst:
einen Schritt des Wechselns zwischen zwei oder mehr Kraftstoff-Traktionsmodi, wenn der monostabile Druckknopf (S) wiederholt gedrückt wird, während der Schalthebel (L) aus dem Abschnitt des Überhubs (eD) gelöst wird, und einen Schritt der Verhinderung der Reaktivierung des Kraftstoff-Traktionsmodus und Halten der Aktivierung des rein elektrischen Traktionsmodus, falls der monostabile Druckknopf (S) während eines Schritts des Lösens des Schalthebels (L) aus dem Abschnitt des Überhubs (eD) gedrückt wird.

10. Verfahren nach Anspruch 9, weiter umfassend einen Schritt der Rückkehr zu einem vorherigen ausgewählten Kraftstoff-Traktionsmodus, wenn das Lösen des Schalthebels (L) aus dem Abschnitt des Überhubs (eD) erkannt wird.

11. Verfahren nach einem der Ansprüche 9 oder 10, wobei der rein elektrische Traktionsmodus nach Lösen des Schalthebels (L) aus dem Abschnitt des Überhubs (eD) beibehalten wird, wenn der monostabile Druckknopf (S) gleichzeitig gedrückt bleibt.

12. Computerprogramm, umfassend Programmcodemittel, die ausgeführt sind, um alle Schritte der Ansprüche 9 bis 11 zu implementieren, wenn das Programm auf einem Computer ausgeführt wird.

13. Computerlesbare Mittel, umfassend ein gespeichertes Programm, wobei die computerlesbaren Mittel Programmcodemittel umfassen, die ausgeführt sind, um alle Schritte der Ansprüche 9 bis 11 zu implementieren, wenn das Programm auf einem Computer ausgeführt wird.

## Revendications

1. Système de sélection d'un mode de traction de véhicule d'un véhicule terrestre hybride ou multimodal, le véhicule comprenant :
- un moteur à combustion interne (E) raccordé à une chaîne cinématique (T) par l'intermédiaire d'une boîte de vitesses manuelle (G), et
- un moteur-générateur (MG) électrique raccordé directement à ladite chaîne cinématique (T),
la boîte de vitesses (G) ayant un levier de commande (L) respectif et un motif de sélection de rapport respectif de la boîte de vitesses (R, 1-5, 1-6), dans lequel ledit motif de sélection comprend une course de sélection (LC) transversale à un développement longitudinal du véhicule et comprend une portion de surcourse (eD) alignée et contiguë à ladite course de sélection (LC) et des moyens d'activation (SS, VHE et CL) associés à ladite portion de surcourse, et dans lequel
- le levier est conçu pour engager de manière stable ladite portion de surcourse, en maintenant la boîte de vitesses (G) de manière stable au point mort et, en même temps
- lesdits moyens d'activation (SS, VHE et CL) sont conçus pour activer un mode de traction purement électrique, dans lequel ledit moteur à combustion interne (E) est désactivé de manière stable en faveur dudit moteur-générateur (MG) électrique,
ledit levier (L) comprenant
une molette associée (P) sur laquelle un bouton-poussoir monostable (S), associé à un commutateur normalement ouvert, est situé, le système de sélection étant **caractérisé en ce qu'**il comprend une unité de traitement (VHE) conçue pour activer l'un des trois ou plus modes de traction de véhicule, parmi lesquels
- deux ou plus modes de traction à carburant, dans lequel ledit moteur à combustion interne est actionné, et
- ledit mode de traction purement électrique,
et dans lequel ledit commutateur normalement ouvert associé audit bouton-poussoir est électriquement raccordé à ladite unité de traitement (VHE) pour permuter entre lesdits deux ou plus modes de carburant différents lorsque ledit levier de boîte de vitesses n'engage pas ladite portion de surcourse (eD) et pour interdire la réactivation dudit mode de carburant et maintenir le mode purement électrique activé si ledit bouton-poussoir (S) est enfoncé au cours d'une étape de désengagement de ladite portion de surcourse (eD).

2. Système selon la revendication 1, dans lequel lesdits moyens d'activation (SS, VHE et CL) sont en outre conçus pour activer un mode de traction dans lequel ledit moteur à combustion interne est au moins cycliquement actif lorsque ledit levier (L) n'engage pas ladite portion de surcourse (eD).

3. Système selon la revendication 1 ou 2, dans lequel ladite portion de surcourse (eD) comprend des moyens de verrouillage qui peuvent être désactivés en faisant coulisser axialement ledit levier (L) par rapport à un support associé ou au moyen d'un manchon (C) ajusté sur ledit levier (L) et interférant avec un profil (SB, DB) d'un support associé (SP).

4. Système selon l'une des revendications précédentes, dans lequel lesdits moyens d'activation comprennent un contact électrique (SS) conçu pour détecter au moins un engagement dudit levier (L) dans ladite portion de surcourse (eD).

5. Système de sélection selon la revendication 1, dans lequel ledit véhicule comprend un embrayage ou accouplement pouvant être commandé (CL) situé sur un arbre de transmission (T) en aval de la boîte de vitesses (G), et dans lequel ladite unité de traitement (VHE) est configurée pour commander le désengagement dudit embrayage ou accouplement (CL) lorsque ledit levier (L) engage ladite portion de surcourse (eD).

6. Système de sélection selon la revendication 5, dans lequel ladite unité de traitement (VHE) est configurée pour :
- maintenir ledit mode purement électrique activé, et
- maintenir ledit embrayage ou accouplement (CL) désengagé,
lorsque, au cours du désengagement du levier (L) depuis ladite portion de surcourse (eD), ledit bouton-poussoir monostable (P) est maintenu enfoncé.

7. Système de sélection selon la revendication 5 ou 6, dans lequel ladite unité de traitement (VHE) est configurée pour :
- désactiver ledit mode purement électrique en faveur d'un mode de carburant, et
- engager ledit embrayage ou accouplement (CL),
lorsque le levier (L) désengage ladite portion de surcourse (eD) pendant que ledit bouton-poussoir monostable (P) est relâché.

8. Véhicule terrestre hybride ou multimodal comprenant :
- un moteur à combustion interne (E) raccordé à une chaîne cinématique (T) par l'intermédiaire d'une boîte de vitesses manuelle (G), et
- un moteur-générateur (MG) électrique raccordé à ladite chaîne cinématique (T),
la boîte de vitesses (G) ayant un levier (L) respectif et un motif de sélection de rapport respectif de la boîte de vitesses (R, 1-5, 1-6), dans lequel ledit motif de sélection comprend une course de sélection (LC) transversale à une extension longitudinale du véhicule et est **caractérisé en ce qu'**il comprend un système de sélection d'un mode de traction de véhicule selon l'une quelconque des revendications 1 à 7.

9. Méthode de sélection d'un mode de traction de véhicule d'un véhicule terrestre hybride ou multimodal comprenant un système de sélection selon l'une quelconque des revendications 1 à 7, la méthode étant destinée à être mise en œuvre sur une unité de traitement de véhicule et comprenant les étapes suivantes :
- la détection d'un engagement dudit levier (L) dans ladite portion de surcourse (eD),
- le passage à un mode de traction purement électrique aussi longtemps qu'il est détecté que ledit levier (L) est engagé dans ladite portion de surcourse (eD),
la méthode comprenant
une étape de permutation entre deux ou plus modes de traction à carburant lorsque ledit bouton-poussoir monostable (S) est enfoncé à répétition pendant que ledit levier (L) est désengagé de ladite portion de surcourse (eD) et une étape d'interdiction de la réactivation dudit mode de carburant et du maintien du mode purement électrique activé si ledit bouton-poussoir monostable (S) est enfoncé au cours d'une étape de désengagement de ladite portion de surcourse (eD) .

10. Méthode selon la revendication 9, comprenant en outre une étape du retour à un mode de traction à carburant préalablement sélectionné, lorsqu'un désengagement dudit levier (L) depuis ladite portion de surcourse (eD) est détecté.

11. Méthode selon la revendication 9 ou 10, dans laquelle ledit mode de traction purement électrique est maintenu à la suite du désengagement dudit levier (L) depuis ladite portion de surcourse (eD) lorsque ledit bouton-poussoir monostable (S) est simultanément maintenu enfoncé.

12. Programme informatique comprenant des moyens de code de programme conçus pour mettre en œuvre toutes les étapes des revendications 9 à 11, lorsque ledit programme est exécuté sur un ordinateur.

13. Moyens lisibles par ordinateur comprenant un programme enregistré, lesdits moyens lisibles par ordinateur comprenant des moyens de code de programme conçus pour mettre en œuvre toutes les étapes des revendications 9 à 11, lorsque ledit programme est exécuté sur un ordinateur.
